# EUROPEAN PATENT APPLICATION

(11) **EP 2 173 130 A1**
(43) Date of publication of application: **07.04.2010**
(21) Application number: 08105494.2
(22) Date of filing: 06.10.2008
(51) Int. Cl.: H04W 64/00, H04W 24/02, H04W 16/26

(54) **Determining the position of a relay node based on location information received from the network neighbourhood**

(71) Applicant: Nokia Siemens Networks OY, 02610 Espoo (FI)
(72) Inventor: The designation of the inventor has not yet been filed
(74) Representative: Bruglachner, Thomas E.

(57) **Abstract**

It is described a method for determining the spatial position of a relay node (114, 214) of a cellular telecommunication network. The described method comprises monitoring a neighboring network element (112, 116b, 124) of the relay node (114), receiving location information from the neighboring network element (112, 116b, 124), the location information being indicative for the position of the neighboring network element (112, 116b, 124), and determining the spatial position of the relay node (114, 214) based on the received location information. Further, it is described a relay node (114, 214), which is adapted to carry out the described position determination method and a computer program, which is adapted to control the described position determination method.

## Description

### Field of invention

The present invention relates to the technical field of mobile wireless communications and is related more specifically to the system behavior of a cellular telecommunication network with the capability to perform a self optimization with respect to the technical settings of various network elements. Preferably, the cellular telecommunication network comprises relay nodes, which support an automated configuration in particular after the respective relay node has been deployed for instance in order to complement an already existing telecommunication network. Specifically, the present invention relates to a method for determining the spatial position of a relay node. Further, the present invention relates to a relay node, which is adapted to carry out the described position determination method and to a computer program, which is adapted to control the described position determination method.

### Art Background

In order to allow for cost efficient and flexible deployment solutions, within the third generation partnership project (3GPP) relaying is investigated as one of the new technologies for Long Term Evolution (LTE) networks and in particular for Long Term Evolution Advanced (LTA-A) networks. It has been shown that with the usage of Relay Nodes (RN) the spatial coverage and/or the capacity of a base station can be significantly increased. Further, geographic areas can be covered which without using RN would suffer from bad radio conditions. Such geographic areas are located typically at the edge of a cell being served by a particular base station (BS) .

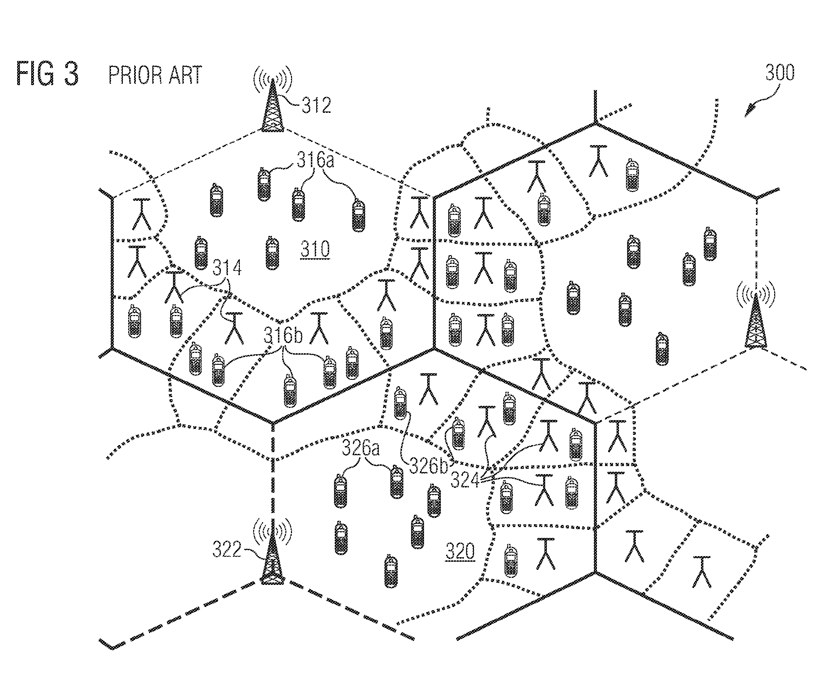

Figure 3 shows a typical state of the art deployment of relay nodes 314, 324 in a hexagonal cell scenario of a macro cellular telecommunication network 300. As can be seen from Figure 3, the telecommunication network 300 network comprises amongst others a first base station 312 and a second base station 322. Each base station serves three sectors. A first sector 310 is assigned to a first cell being served by the first base station 312. A second sector 320 is assigned to a second cell being served by the second base station 322.

In order to extend the spatial coverage of the cells 310 and 320 the relay nodes 314 and 324 are located in the region of the outer borders of the cells 310 and 320, respectively. Within the first cell 310 there are located user equipments 316a, which are directly served by the first base station 312, and user equipments 316b, which are served by the relay nodes 314. Within the second cell 320 there are located user equipments 326a, which are directly served by the second base station 322, and user equipments 326b, which are served by the relay nodes 324.

A precondition to transmit downlink data from the BS 312, 322 to the UEs 316b, 326b at the cell edge via the RN 314, 324 is, that the BS 312, 322 has to feed the RN 314, 324 with data first (first hop, wireless connectivity between RN and the corresponding BS) and then in the second hop utilize the RN 314, 324 for connecting the UEs 316b, 326b.

As can be seen from Figure 3, compared to the number of base stations the number of RN's can be quite huge. This may hold in particular in future telecommunication networks, wherein it is expected that RN's will be frequently utilized in order to improve the coverage of a macro cell.

An operator of a cellular telecommunication networks will have little interest to manually manage the expected high number of RN's within its network. Installation and maintenance duties and responsibilities may be sub-contracted to local service companies, which will receive a large freedom with respect to their installation and maintenance work. However, for a self configuration and optimization of a telecommunication network comprising RN's, the network operator needs to know the exact position of RN's, e.g. to optimize physical cell ID allocations, scrambling codes, power settings, handover regions, a user equipment respectively a cell throughput and/or a timing settings for serving different user equipments.

In order to save investment costs a RN will be typically of a low cost and simple implementation. Thus RN's will typically not contain any additional hardware to measure its location, e.g. by means of GPS. Further, in indoor and dense urban scenarios, GPS is anyhow not applicable. Therefore the only RN position determination method currently available is to do an expensive human intervention along the installation to acquire the location by an external GPS receiver and to store this information in the RN.

There may be a need for providing a method for determining the spatial position of a relay node, which method (a) can be accomplished also with low cost and simple relay nodes and (b) does not require extensive human interaction when installing the relay node.

### Summary of the Invention

This need may be met by the subject matter according to the independent claims. Advantageous embodiments of the present invention are described by the dependent claims.

According to a first aspect of the invention there is provided a method for determining the spatial position of a relay node of a cellular telecommunication network. The provided method comprises (a) monitoring a neighboring network element of the relay node, (b) receiving location information from the neighboring network element, the location information being indicative for the position of the neighboring network element, and (c) determining the spatial position of the relay node based on the received location information.

This first aspect of the invention is based on the idea that position information about the neighborhood of a relay node (RM) can be used to evaluate the spatial position of the RN. This procedure might be in particular advantageous if the RN is deployed as a new RN within a cell of the cellular telecommunication network.

The described position determining method may provide the advantage that the RN can determine its spatial position simply by evaluating position information acquired from the network neighborhood. Therefore, the position determination can be carried out by using an appropriate algorithm. No other hardware position determining means such as for instance a Global Positioning System (GPS) receiver are necessary.

The neighboring network element (NE) may be any network entity, which is adapted to transmit and/or to broadcast radio signals being indicative for its spatial position.

According to an embodiment of the invention monitoring a neighboring network element, receiving location information and/or determining the spatial position is carried out by the relay node.

Descriptive speaking, the RN is capable of monitoring adjacent network equipment and of reading system specific information from these network element. This means that the RN itself can determine its spatial location. There is no need for a central network element such as for instance a base station controller or an operation and maintenance centre, which has to be involved in order to determine the RN's spatial position. This may provide the advantage that the RN can represent a network element of a so called Self Optimizing Network (SON), which is capable of optimizing its own configuration within the telecommunication network. In this context the RN configuration may comprise for instance a physical ID allocation, a selection of a proper scrambling code, a selection of appropriate power settings, a definition of handover regions and/or an optimizing of a user respectively a cell throughput and timing setting.

The spatial coverage, wherein the neighboring network element might be located, is determined by the spatial range of the radio signals containing the location information. Of course, it is necessary that the radio signals being transmitted from the neighboring network element can be picked up by the RN.

The RN can determine its spatial position based on the location information from and about the neighbouring network element. For the determination of its spatial position the RN can take into account known principles of the transmission of radio signals within a macro cell. In particular the RN can take into account the transmitting power of the neighbouring network element and the well known equation for a pathloss.

According to a further embodiment of the invention the network element is a macro base station, a further relay node, a Wireless Local Area Network (WLAN) access point or a user equipment (UE) having a position location capability. This may provide the advantage that the position information for the RN can be acquired by different types of network elements, such that the described method can be carried out in many network configurations even if the density of network elements, from which location information can be received, is comparatively small. Due to the fact that in principle any network element, which is capable of transmitting radio signals, can be used as a data source for location information, in most situations there will be present at least one appropriate network element for providing the RN with its location information.

A UE may be any type of communication end device, which is capable of connecting (a) with any arbitrary access point of the cellular telecommunication network and (b) with the described RN. In particular the UE may be a cellular mobile phone, a Personal Digital Assistant (PDA), a notebook computer and/or any other movable communication device.

The described position location capability may be realized for instance by means of a global positioning system (GPS) receiver. Preferably, the GPS receiver is implemented within the UE. Further, the position location capability may also be realized by means of a receiver unit, which is capable of connecting for instance to Wireless Local Area Network (WLAN) access points, which are located at well known position. If the receiver unit is able to connect to a certain WLAN access point, it has to be concluded that the UE is located within the radio range of the WLAN access point.

According to a further embodiment of the invention the cellular telecommunication network is a long term evolution network or an advanced long term evolution network. This may provide the advantage that the described method can be carried out within those types of telecommunication networks, which provide for an in particular high benefit from the usage of RNs.

However, it has to be pointed out that the described method can also be carried out in other radio network technologies. Of course, parameters and procedures have to be adapted to the other technology, which might involve other interfaces and architectures.

The invention is applicable for both Frequency Division Duplex and Time Division Duplex technologies and can be applied to all kind of mobile networks. This may imply RN's, macro base stations and sectors which for the sake of simplicity may be configured by SON procedures.

According to a further embodiment of the invention the step of determining the spatial position of the relay node takes into account (a) a propagation delay, (b) a timing advance and/or (c) a pathloss of a signal being transmitted from the network element to the relay node.

In particular, the pathloss may be determined by the RN if the neighbouring network element transmits and/or broadcasts a radio signal with a defined and in particular with a maximal transmitting power. If this defined transmitting power is known by the RN the RN can determine at least the approximate distance to the transmitting network element by applying the well known path loss equation, which describes the attenuation of the radio signal while propagating across the radio interface between the neighbouring network element and the RN.

It has to be mentioned that the accuracy of the position determination based on the pathloss equation can be significantly increased if the pathloss determination is accomplished a couple of times and subsequently an appropriate averaging procedure is carried out. In this case for instance short term radio effects influencing the radio propagation will be averaged out.

According to a further embodiment of the invention the neighboring network element is a base station, which is capable of performing beam forming of transmitted radio signals. Further, when determining the spatial position of the relay node antenna weights of a transmitter array of the base station are taken into account.

In this respect the term beam forming is used for a general signal processing technique, which is used to control the directionality of the transmission of a radio signal by the transmitter array. By adjusting the antenna weights and/or the phase relation between different antennas of the base station the directionality of the RN, which receives the beam formed radio signals, can be taken into account for determining the spatial position of the RN.

Although it is hardly possible to determine the exact distance between the neighboring network element and the RN solely by means of the antenna weights, the antenna weights might be very useful in order to exclude ambiguousness spatial positions of the RN.

According to a further embodiment of the invention the method further comprises (a) monitoring at least one further neighboring network element of the relay node, (b) receiving at least one further location information from the at least one further neighboring network element, the location information being indicative for the position of the at least one further neighboring network element, and (c) determining the spatial position of the relay node based on the at least one further received location information. This may provide the advantage that the RN can significantly enlarge its database for receiving or acquiring location information from its network environment.

In this respect it will be clear that the accuracy for determining the spatial position of the relay node will be increased if the number of network elements, which are adapted to provide the RN with its respective location information, gets larger. For instance errors with respect to the location information of the neighboring network element can be averaged out.

According to a further embodiment of the invention the method further comprises (a) receiving quality information from the neighboring network element, wherein the quality information is indicative for the location accuracy of the location information from the neighboring network element, and (b) determining the spatial position of the relay node based on the received quality information. This may provide the advantage that the precision of the received location information can be taken into account for a subsequent SON procedure, wherein the RN is involved. The quality information may describe different qualities and reliabilities of network equipment location. In case an appropriate parameter is used for the quality information this parameter may have a range which can be standardized.

In this respect it is mentioned that the described quality information can be transmitted upon request. However, preferably, the quality information is periodically broadcasted by the network element such that any RN which is deployed just now in the neighborhood of the network element, will be able to receive the quality information in a little while after the operation and/or a self configuration of the RN has started.

According to a further embodiment of the invention the quality information comprises a movability indicator being indicative whether the network element is a movable network element.

In particular, if the neighboring network element is a movable device such as for instance a RN, a pico NodeB used in an office building or a Home enhanced NodeB (H(e)NB), then this device can be considered as to represent comparatively inaccurate location information only. By contrast thereto, if the neighboring network element is a stationary network element, the corresponding location information could be considered as to be more reliable.

According to a further embodiment of the invention the quality information comprises a reliability indicator (a) whether the neighboring network element comprises a global positioning system receiver, (b) whether the neighboring network element is an operator planned network element and/or (c) whether the neighboring network element is a network element, which has been set up via an auto configuration procedure. This may provide the advantage that the RN can easily recognize the reliability of the received location information.

Specifically, a network element, which is provided with an own global positioning system (GPS) receiver, may receive a best reliability indicator. Further, since typically network operator planned cells will have the planning data available, which may be provided by an operation and maintenance center, network elements being assigned to a planned cell may receive a good, but however not the best reliability indicator. Furthermore, an auto configured neighboring network element may receive a comparatively low quality indicator.

In particular, if a GPS receiver is available in the network environment, the RN can use a procedure, which takes benefit from the network element having a GPS receiver. Thereby, a signaling radio connection to such a network element may be established and the recent location information can be polled. Thereby, additional information like timing advance or observed time difference may be taken into account.

It is mentioned that basically similar procedures are known in order to estimate the location of a user equipment (UE). However, according to the embodiment described here the position of the RN is the unknown variable, which is supposed to be determined, and not the position of the UE which is known from GPS measurements.

According to a further embodiment of the invention the quality information is used by a location determination procedure as a weight factor. This may provide the advantage that the quality information can be used in a reliable manner for the described location determination of the RN.

In particular, during an initial setup phase a RN node may start with a procedure (a) to monitor an adjacent visible network element, (b) to acquire respectively to receive the corresponding location and quality information from the monitored network element and (c) based on the received location and quality information, fed corresponding parameters as weight factors into an algorithm, which uses the location and quality information in order to determine the own location.

According to a further embodiment of the invention the method further comprises updating the quality information of the neighboring network element based on the determined spatial position of the relay node. This may provide the advantage that the neighboring network element and the RN can cooperate with each other in order to determined appropriate location information for both of them.

In particular, such a cooperation will provide a high benefit with respect to the location accuracy of the neighboring network element if the determined spatial position of the relay node is based on the location information of a plurality of neighboring network element. In that case the location information of a plurality of network elements can be used in order to determine reliable amended location information of all the network elements, which are involved in the iterative and/or reciprocally location determination procedure.

Of course, after updating the quality information of the neighboring network this updated quality information can be used in order to provide for the determination of an updated spatial position of the RN. In principal, the procedure of reciprocally improving the spatial position of the RN respectively the location information of the neighboring network element can be continued in an iterative process.

It is further mentioned that if the RN has gained knowledge about its own spatial position, the RN may transmit a corresponding position information to at least one another neighbouring network element, which may take into account this position information from the RN in order to update and/or in order to further improve its location information. Thereby, of course also quality information about the accuracy of the RN position can be taken into account and quality information about the positing of the respective neighbouring network can be updated. Of course, the quality information of the position information from the RN may depend on the original quality information, which has been received by the RN from the neighbouring network element(s).

According to a further aspect of the invention there is provided a relay node for determining its spatial position within of a cellular telecommunication network. The provided relay node comprises (a) a monitoring unit for monitoring a neighboring network element, (b) a receiving unit for receiving a location information from the neighboring network element, the location information being indicative for the position of the neighboring network element, and (c) a processing unit for determining the spatial position of the relay node based on the received location information.

Also this second aspect of the invention is based on the idea that position information about the neighborhood of a relay node (RM) can be used by the RN to evaluate its spatial position. This procedure might be accomplished in an advantageous manner in particular if the RN is deployed as a new RN within a cell of the cellular telecommunication network.

According to a further aspect of the invention there is provided a computer program for determining the spatial position of a relay node of a cellular telecommunication network. The computer program, when being executed by a data processor, is adapted for controlling the method as described above.

As used herein, reference to a computer program is intended to be equivalent to a reference to a program element and/or a computer readable medium containing instructions for controlling a computer system to coordinate the performance of the above described method.

The computer program element may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or other programmable device to carry out the intended functions. The computer program may be available from a network, such as the WorldWideWeb, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a relay node retrieving location information from neighboring network elements.
Figure 2 shows a relay node comprising a monitoring unit, a receiving unit and a processing unit in order to be able to determine the spatial location of the relay node based on location information, which has been received from neighboring network elements.
Figure 3 shows a state of the art deployment of relay nodes in a hexagonal cell scenario of a cellular telecommunication network.

### Detailed Description

The illustration in the drawing is schematically. It is noted that in different figures, similar or identical elements are provided with the same reference signs or with reference signs, which are different from the corresponding reference signs only within the first digit.

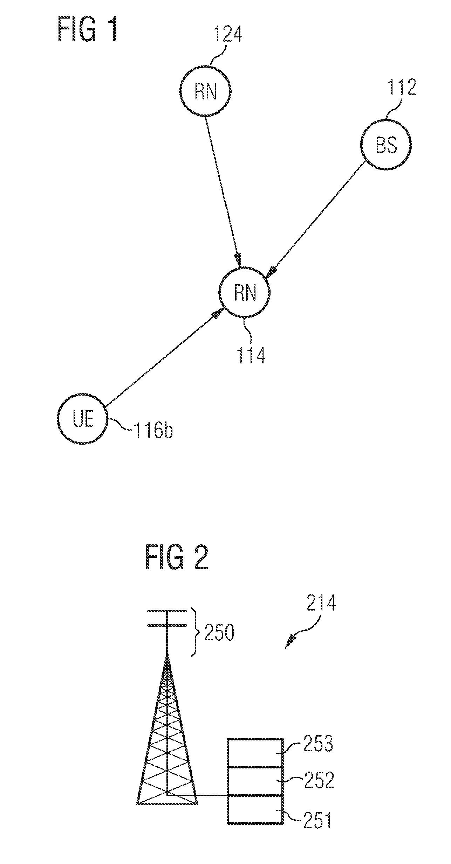

Figure 1 shows a relay node (RN) 114, which is retrieving location information from neighboring network elements 112, 124, 116b.
A) According to the embodiment described here the network element 112 is a macro base station (BS), which is serving a cell of a telecommunication network. In particular, the BS 112 feeds the RN 114. Based on the received location information being in indicative for the position of the BS 112, the RN 114 may determine its own position. Thereby, the RN 114 may take into account the received transmitting power, which, when considering the well known equation for the pathloss for radio signals, is indicative for the distance between the BS 112 and the RN 114.
   Further, the RN 114 might take into account a propagation delay for a first radio signal travelling from the RN 114 to the base station 112 and for a second signal between the BS 112 and the RN 114. Thereby, the second signal may be a response of the first signal with a predefined time delay between the arrival of the first signal and the emission of the second signal.
B) According to the embodiment described here the network element 124 is a further RN. The position of the RN 124 is known with at least some accuracy for instance by having carried out the described position determination method with the further RN 124. Since a usual RN has the capability of transmitting radio signals, the further RN 124 can transmit location information to the RN 114, wherein this location information is indicative for the spatial position of the further RN 124. Based on this information and, if applicable while taking into account also the above mentioned location information from the BS 112, the RN 114 can determine its spatial position. Thereby, the RN 114 might again take into account for instance a measured pathloss of the radio signal being transmitted from the further RN 124 with a predefined transmitting power.
C) According to the embodiment described here the network element 116b is a user equipment (UE). The position of the UE 116b might be known for instance from a global positioning (GPS) receiver, which is implemented in the UE 116b. The UE 116b sends location information about its own position to the RN 114. Based on this information and, if applicable with taking into account also the above described location information from the BS 112 and/or the further RN 124, the RN 114 can determine its spatial position. As has already been mentioned above in connection with the BS 112, the RN 114 might again take into account for instance a propagation delay for radio signal travelling from the RN 114 to the UE 116b and for another radio signal between the UE 116b and the RN 114.

It has to be mentioned that the position determination method described in this application does not require, that the RN 114 retrieves location information from all the network elements 112, 116b and 124. Even though the accuracy of the described position determination method increases if location information is acquired from a large number of neighboring network elements, the described method can also be accomplished with only one or two neighboring network elements. Further, the RN may acquire location information from a number of neighboring network elements, which are all of the same or at least of a similar type.

It is further mentioned that the RN 114 may determine a reliability parameter being indicative for the accuracy of its determined spatial position. This reliability parameter may depend on quality information, which has been broadcasted from at least one of the neighbouring network elements 112, 116b and 124 and which has been received by the RN 114.

From initial operation of the RN 114 the value of the determined reliability parameter regarding the positioning information of the RN 114 can increase. For example the more measurements regarding position and timing advanced (e.g. coming from the UE 116b having an integrated GPS) are utilized the more accurate is the position of the RN 114 will be. Then this position can be updated in an Operation and Maintenance (O&M) data base and, if an update is accepted by the O&M data base, the value of the position reliability will be increased and transmitted via for instance a broadcast control channel to other network elements of the cellular telecommunication network.

Figure 2 shows a relay node (RN) 214 in accordance with an embodiment of the invention described in this application. The RN 214 comprises an antenna 250 for transmitting and/or for receiving radio signals. The RN 214 further comprises a monitoring unit 251 for monitoring a neighboring network element, a receiving unit 252 for receiving a location information from the neighboring network element, wherein the location information is indicative for the position of the neighboring network element and a processing unit 253 for determining the spatial position of the RN 214 based on the received location information.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 112: base station
- 114: relay node
- 116b: user equipment
- 124: further relay node

- 214: relay node
- 250: antenna
- 251: monitoring unit
- 252: receiving unit
- 253: processing unit

- 300: cellular telecommunication network
- 310: first cell / first sector
- 312: first base station
- 314: first relay node
- 316a: user equipment
- 316b: user equipment
- 320: second cell
- 322: second base station / second sector
- 324: second relay node
- 326a: user equipment
- 326b: user equipment

## Claims

1. Method for determining the spatial position of a relay node (114, 214) of a cellular telecommunication network, the method comprising
• monitoring a neighboring network element (112, 116b, 124) of the relay node (114),
• receiving location information from the neighboring network element (112, 116b, 124), the location information being indicative for the position of the neighboring network element (112, 116b, 124), and
• determining the spatial position of the relay node (114, 214) based on the received location information.

2. The method as set forth in the preceding claim, wherein
- monitoring a neighboring network element (112, 116b, 124),
- receiving location information and/or
- determining the spatial position
is carried out by the relay node (114, 214).

3. The method as set forth in any one of the preceding claims, wherein
the network element is a macro base station (112), a further relay node (124), a wireless local area network access point or a user equipment (116b) having a position location capability.

4. The method as set forth in any one of the preceding claims, wherein
the cellular telecommunication network is a long term evolution network or an advanced long term evolution network.

5. The method as set forth in any one of the preceding claims, wherein
determining the spatial position of the relay node (114, 214) takes into account
- a propagation delay,
- a timing advance and/or
- a pathloss
of a of a signal being transmitted from the network element (112, 116b, 124) to the relay node (114, 214).

6. The method as set forth in any one of the preceding claims, wherein
the neighboring network element is a base station (112), which is capable of performing beam forming of transmitted radio signals and
wherein determining the spatial position of the relay node (114, 214) comprises taking into account antenna weights of a transmitter array of the base station (112).

7. The method as set forth in any one of the preceding claims, further comprising
• monitoring at least one further neighboring network element (124) of the relay node (114, 214),
• receiving at least one further location information from the at least one further neighboring network element (124), the location information being indicative for the position of the at least one further neighboring network element (124), and
• determining the spatial position of the relay node (114, 214) based on the at least one further received location information.

8. The method as set forth in any one of the preceding claims, further comprising
• receiving quality information from the neighboring network element (112, 116b, 124), wherein the quality information is indicative for the location accuracy of the location information from the neighboring network element (112, 116b, 124), and
• determining the spatial position of the relay node (114, 214) based on the received quality information.

9. The method as set forth in claim 8, wherein
the quality information comprises a movability indicator being indicative whether the network element (112, 116b, 124) is a movable network element.

10. The method as set forth in the preceding claims 8 to 9, wherein
the quality information comprises a reliability indicator
- whether the neighboring network element (112, 116b, 124) comprises a global positioning system receiver,
- whether the neighboring network element (112, 116b, 124) is an operator planned network element and/or
- whether the neighboring network element (112, 116b, 124) is a network element, which has been set up via an auto configuration procedure.

11. The method as set forth in the preceding claims 8 to 10, wherein
the quality information is used by a location determination procedure as a weight factor.

12. The method as set forth in the preceding claims 8 to 11, further comprising
• updating the quality information of the neighboring network (112, 116b, 124) element based on the determined spatial position of the relay node (114, 214).

13. A relay node for determining its spatial position within of a cellular telecommunication network, the relay node (114, 214) comprising
• a monitoring unit (251) for monitoring a neighboring network element (112, 116b, 124),
• a receiving unit (252) for receiving a location information from the neighboring network element (112, 116b, 124), the location information being indicative for the position of the neighboring network element (112, 116b, 124), and
• a processing unit (253) for determining the spatial position of the relay node (114, 214) based on the received location information.

14. A computer program for determining the spatial position of a relay node (114, 214) of a cellular telecommunication network, the computer program, when being executed by a data processor, is adapted for controlling the method as set forth in any one of the claims 1 to 12.
